# EUROPÄISCHE PATENTANMELDUNG

(11) **EP 4 799 831 A2**
(43) Veröffentlichungstag der Anmeldung: **02.09.2026**
(21) Anmeldenummer: 26160011.8
(22) Anmeldetag: 23.02.2026
(51) Int. Cl.: B60G 11/16, B60G 17/02, B62B 9/18, B60B 33/04

(54) **FEDEREINHEIT UND RADAUFHÄNGUNG**

(30) Priorität: 26.02.2025 DE 102025107314
(71) Anmelder: Emmaljunga Holding AB, 28268 Vittsjö (SE)
(72) Erfinder: Wedin, Erik, 28267 Vittsjö (SE); Bost, Bart Willem Jozef, 6213HD Maastricht (NL); Edvardsson, Joakim, 28143 Hässleholm (SE); Joosten, Alexander Johan Louis, 6041MJ Roermond (NL); de Graaff, Marc Geradus Jozef, 6229HW Maastricht (NL)
(74) Vertreter: Müller Schupfner & Partner Patent- und Rechtsanwaltspartnerschaft mbB (Muc)

(57) **Zusammenfassung**

Die vorliegende Erfindung betrifft eine Radaufhängung mit einer Federeinheit, insbesondere zum Einsatz in einem Kindertransportfahrzeug, vorgesehen, umfassend ein Gehäuse, eine Spanneinheit und einen Rücksteller, wobei die Spanneinheit einen ersten Stützabschnitt zur Abstützung am Gehäuse und einen zweiten Stützabschnitt zur Übertragung einer entlang einer Spannachse wirkenden Vorspannkraft auf den Rücksteller aufweist, wobei die Spanneinheit in einem ersten Zustand dazu ausgelegt ist, eine erste Vorspannkraft auf den Rücksteller zu auszuüben, wobei die Spanneinheit in einem zweiten Zustand dazu ausgelegt ist, eine zweite Vorspannkraft auf den Rücksteller zu übertragen, wobei die zweite Vorspannkraft größer ist als die erste Vorspannkraft.

## Beschreibung

Die vorliegende Erfindung betrifft Federeinheit für eine einstellbare Federung und eine Radaufhängung, insbesondere zum Einsatz in einem Kindertransportfahrzeug.

Einstellbare Federungen für Kindertransportfahrzeuge sind aus dem Stand der Technik bekannt. Diese dienen in der Regel der Anpassung der Federung des Kindertransportfahrzeuges an das zu transportierenden Gewicht. Bei aus dem Stand der Technik bekannten Lösungen sind dabei beispielsweise Hebel vorgesehen, mit welchen ein Federelement stärker oder weniger stark vorgespannt werden kann, um entsprechend die Härte der Federung einzustellen. Auf diese Weise kann der Komfort, welcher beim Fahren des Kindertransportfahrzeuges über unebenen Grund möglich ist, an das Gewicht des Kindes oder weiterer Zuladung im Kindertransportfahrzeug angepasst werden. Nachteilig bei den aus dem Stand der Technik bekannten Lösungen ist, dass insbesondere die Einstellmechanismen für die Federung nicht gekapselt sind und somit insbesondere durch Schmutz und Korrosion blockiert werden können und somit oft eine nur geringe Lebensdauer aufweisen. Außerdem sind die Einstellmöglichkeiten der bekannten Federungen sehr begrenzt. Zum anderen sind die bekannten Lösungen sehr teuer und benötigen insbesondere besonders feste und damit schwere Herstellungsmaterialien.

Es ist daher Aufgabe der vorliegenden Erfindung, einer Radaufhängung und eine einstellbare Federung bereitzustellen, welche eine hohe Lebensdauer aufweist und besonders kostengünstig und leichtbauend herzustellen ist.

Diese Aufgabe wird gelöst mit einer Federeinheit gemäß Anspruch 1 und einer Radaufhängung gemäß Anspruch 13. Weitere Vorteile und Merkmale der vorliegenden Erfindung ergeben sich aus den abhängigen Ansprüchen.

Erfindungsgemäß ist eine Federeinheit, insbesondere zum Einsatz in einem Kindertransportfahrzeug, vorgesehen, umfassend ein Gehäuse, eine Spanneinheit und einen Rücksteller, wobei die Spanneinheit einen ersten Stützabschnitt zur Abstützung am Gehäuse und einen zweiten Stützabschnitt zur Übertragung einer entlang einer Spannachse wirkenden Vorspannkraft auf den Rücksteller aufweist, wobei die Spanneinheit in einem ersten Zustand dazu ausgelegt ist, eine erste Vorspannkraft auf den Rücksteller zu auszuüben, wobei die Spanneinheit in einem zweiten Zustand dazu ausgelegt ist, eine zweite Vorspannkraft auf den Rücksteller zu übertragen, wobei die zweite Vorspannkraft größer ist als die erste Vorspannkraft. Dies bedeutet in einer Ausführungsform, dass die erste Vorspannkraft gleich null sein kann, der Rücksteller also spielfrei und nicht vorgespannt in der Federeinheit angeordnet ist. Diese Ausführungsform erlaubt somit eine besonders weiche Federung des Kindertransportfahrzeugs, welche bei Neugeborenen vorteilhaft ist. Die Spanneinheit erlaubt es, die Federung in einen ersten Zustand zu versetzen, in welcher eine geringere Federhärte vorliegt, oder in einen zweiten Zustand mit einer größeren Federhärte. Insbesondere ist die Spanneinheit in einem Gehäuse angeordnet, welches dafür vorgesehen ist, in einem Aufnahmebereich eines Rahmens eines Kindertransportfahrzeuges eingesetzt und dort formschlüssig gesichert zu werden. In diesem Einbauzustand ist die Spanneinheit gegen das Eindringen von Schmutz und korrosiven Flüssigkeiten geschützt und erreicht somit eine hohe Lebensdauer. Darüber hinaus ist die Spanneinheit vorzugsweise dann einstellbar, wenn das Gehäuse mit samt der Spanneinheit aus dem Aufnahmebereich am Rahmen des Kindertransportfahrzeuges herausgenommen wird. Dies ist insbesondere deswegen ausreichend, weil das Verstellen der Spanneinheit und das Einstellen des ersten Zustandes oder des zweiten Zustandes oder eines dazwischenliegenden weiteren Vorspannzustandes nur gelegentlich erforderlich ist, insbesondere dann wenn beispielsweise das Kindertransportfahrzeug von einer Babyschale auf einen Sportsitze umgerüstet wird. Es ist somit im Rahmen der vorliegenden Erfindung vorgesehen, dass die vor Spanneinheit nur in seltenen Fällen verstellt wird, und sie ansonsten im Aufnahmebereich des Rahmens eines Kinderfahrzeuges geschützt angeordnet und dort mit einer hohen Lebensdauer versehen ist. Ein Vorteil der vorliegenden Erfindung ist der besonders große Einstellbereich der Federeinheit, welcher sich mithilfe der Spanneinheit verwirklichen lässt. Hierdurch kann eine besonders optimierte Federung sowohl für Neugeborene mit einem Körpergewicht von weniger als 3 kg bis hin zu Kindern von 22 kg Gewicht. Die Spanneinheit definiert die Vorspannkraft, die auf den Rücksteller wirkt, wodurch sich die Federhärte der Federung voreinstellen lässt. Vorteilhaft ist weiterhin die bevorzugte Funktionsintegration des Gehäuses als Teil eines Armes, wobei das Gehäuse an seiner Außenseite als drehbarer Bolzen ausgelegt ist, welcher drehbar um eine vertikale Drehachse in einem Aufnahmebereich des Rahmens des Kindertransportfahrzeugs anordenbar ist. Hierdurch kann die Federeinheit besonders platzsparend im Rahmen des Kindertransportfahrzeugs untergebracht werden und ist besonders gut gegen das Eindringen von Verunreinigungen geschützt. Das Gehäuse ersetzt somit mit Vorteil einen sonst üblichen Metallbolzen, welcher in aus dem Stand der Technik bekannten Lösungen die schwenkbare Lagerung der Räder am Rahmen des Kindertransportfahrzeugs gewährleistet.

In einer Ausführungsform weist die Spanneinheit ein erstes Spannelement und ein zweites Spannelement auf, wobei die Spannelemente relativ zueinander entlang einer Verlagerungsachse verlagerbar sind und in Eingriff miteinander stehen, wobei der erste Stützabschnitt am ersten Spannelement ausgebildet ist und der zweite Stützabschnitt am zweiten Spannelement ausgebildet ist. Das erste Spannelement und das zweite Spannelement sind insbesondere derart zueinander entlang der Verlagerungsachse verlagerbar, dass eine bestimmte Vorspannung des Rückstellers einstellbar ist. Besonders bevorzugt ist dabei diese Verlagerung und die daraus resultierende Vorspannung stufenlos einstellbar. Es versteht sich aber, dass beispielsweise Rastabschnitte vorgesehen sein können, um eine bestimmte Position des ersten Spannelementes relativ zum zweiten Spannelement eingestellt und gesichert werden kann. Über die Stützabschnitte stützt sich die Spanneinheit zum einen am Gehäuse und zum anderen an dem Rücksteller ab. Der Rücksteller wiederum ist dafür vorgesehen sich an seinem, von der Spanneinheit abgewandten Ende, an einem Radträger abzustützen und diesen mit einer Federkraft zu beaufschlagen.

In einer Ausführungsform weist das erste Spannelement einen Eingriffsabschnitt auf, welcher dafür ausgelegt ist, das zweite Spannelement entlang der Verlagerungsachse zu verlagern. Der Eingriffsabschnitt am ersten Spannelement ist insbesondere dafür vorgesehen, eine bestimmte relativ Position des zweiten Spannelements relativ zum ersten Spannelement einzustellen. In einer besonders bevorzugten und einfachen Ausführungsform ist der Eingriffsabschnitt als Gewinde ausgeführt.

In einer Ausführungsform ist der Eingriffsabschnitt derart ausgelegt, dass eine Rotation des ersten Spannelements um die Verlagerungsachse eine Verlagerung des zweiten Spannelements parallel zur Verlagerungsachse relativ zum ersten Spannelement bewirkt, wobei am zweiten Spannelement zumindest eine Rotationssicherung, vorzugsweise zwei Rotationssicherungen, ausgebildet ist/sind, welche zum Eingriff mit dem Gehäuse ausgebildet ist/sind um das zweite Spannelement gegen Rotation um die Verlagerungsachse relativ zum Gehäuse zu sichern. Während das erste Spannelement somit um die Verlagerungsachse relativ zum Gehäuse verdrehbar ist, ist das zweite Spannelement gegen Verdrehung relativ zum Gehäuse gesichert und dabei entlang der Verlagerungsachse verlagerbar. Diese besonders kompakte, einfache und besonders kostengünstig herzustellende Ausführungsform der Spanneinheit und des korrespondierend dazu ausgeführten Gehäuses, erlaubt eine funktionssichere Ausbildung der Federeinheit. Die Verdrehbewegung des ersten Spannelementes relativ zum zweiten Spannelement kann dabei beispielsweise durch ein Gewinde oder durch eine keilförmige Eingriffsgeometrie zwischen den Spannelementen jeweils in eine Längsverlagerung des zweiten Spannelements entlang der Verlagerungsachse umgesetzt werden.

In einer bevorzugten Ausführungsform weist die Spanneinheit ein Kraftübertragungselement auf, welches mit dem Eingriffsabschnitt interagiert, um das zweite Spannelement relativ zum ersten Spannelement zu verlagern, wobei das Kraftübertragungselement mit Vorteil als Mutter ausgebildet ist, welche in einem korrespondierenden Rücksprung am zweiten Spannelement eingesetzt und gegen Rotation relativ zum zweiten Spannelement gesichert ist. In einer besonders vorteilhaften Ausführungsform ist das erste Spannelement als Schraube mit vorzugsweise selbsthemmendem Gewinde ausgeführt, wobei eine mit dem zweiten Spannelement in Eingriff stehende Mutter vorgesehen ist, welche ein mit dem Gewinde des ersten Spannelements korrespondierendes Innengewinde aufweist. Die Kombination des zweiten Spannelements mit einer Mutter erlaubt, das zweite Spannelement aus leichtem und kostengünstigem Material, wie beispielsweise leichtem Kunststoff, herzustellen, während die Mutter aus festerem Material, wie beispielsweise hartem Kunststoff oder Metall ausgebildet ist und somit größere Kräfte aufnehmen kann. Dies sorgt für eine besonders gewichtoptimierte Auslegung des zweiten Spannelements und damit der gesamten Spanneinheit, da festes und damit in der Regel schwereres Material nur dort benötigt wird, wo hohe Materialspannungen zu erwarten sind, also besonders bevorzugt im Bereich des Eingriffs zwischen dem ersten Spannelement und der Mutter. Bevorzugt weist die Mutter eine Verdrehsicherung auf, welche beispielsweise als Nylonring ausgeführt ist, und welche ungewollte Verdrehung der Mutter und des an dieser eingreifenden zweiten Spannelements relativ zum ersten Spannelement verhindert. Ein von einem Anwender an das erste Spannelement angelegtes Drehmoment überwindet dabei die Verdrehsicherung ab einer vorbestimmten Größe.

In einer Ausführungsform ist das zweite Spannelement als ringförmiger Körper ausgebildet und weist ein Innengewinde zum Eingriff mit dem Eingriffsabschnitt auf, wobei der zweite Stützabschnitt an einer dem Rücksteller zugewandten Stirnfläche des zweiten Spannelements ausgeführt ist. Das ausbilden des Eingriffsabschnitts als Gewinde, welcher mit einem korrespondierenden Innengewinde an einem ringförmig ausgebildeten zweiten Spannelement interagiert, erlaubt insbesondere, durch den Gewindegang eine bestimmte Verlagerungsbewegung pro Winkeländerung am ersten Spannelement einzustellen. Es kann auf diese Weise ein guter Kompromiss zwischen einer benötigten Verdrehung des ersten Spannelementes und besonders großen Vorspannkräften am zweiten Spannelement eingestellt werden.

In einer Ausführungsform weist das erste Spannelement einen keilförmigen Eingriffsabschnitt aufweist welcher mit einem korrespondierenden keilförmigen Abschnitt am zweiten Spannelement in Eingriff bringbar ist, wobei eine Rotation des ersten Spannelements, vorzugsweise um 90°, die Federeinheit vom ersten Zustand in den zweiten Zustand oder umgekehrt versetzt. Der Vorteil der keilförmigen Ausführung der Eingriffsgeometrie zwischen dem ersten Spannelement und dem zweiten Spannelement ist, dass durch einen vordefinierten Winkel von 90° die Spanneinheit vom ersten in den zweiten Zustand versetzt werden kann oder umgekehrt. Dies vereinfacht die Handhabung der Federeinheit für einen Anwender, da nicht auf eine bestimmten Verdrehwinkel des ersten Spannelementes zu achten ist. Allerdings wird dieser Vorteil, gegenüber der Ausführungsform mit einem als Gewinde ausgeführten Eingriffsabschnitt, durch ein relativ hohes Drehmoment, welches am ersten Spannelement angelegt werden muss, erkauft.

In einer Ausführungsform ist die Spanneinheit einstückig ausgeführt und weist einen Eingriffsabschnitt zum formschlüssigen Eingriff mit dem Rücksteller auf, wobei vorzugsweise der Eingriffsabschnitt als Gewinde ausgeführt und zum Eingriff mit einem als Spiralfeder ausgebildeten Rücksteller vorgesehen ist. Alternativ zur zweiteiligen oder mehrteiligen Ausführungsform der Spanneinheit, kann diese auch einstückig ausgebildet sein. Insbesondere greift dabei der an der Spanneinheit vorgesehene Eingriffsabschnitt nicht am zweiten Spannelement, sondern unmittelbar am Rücksteller ein und verformt diesen, je nach Stellung der Spanneinheit, wodurch sich eine bestimmte Vorspannkraft ergibt. Eine mögliche Ausführungsform ist beispielsweise, dass die Spanneinheit als Schrauben förmiges Element ausgeführt ist, welches mit einer korrespondierenden Spiralfeder interagiert, wobei die Spiralfeder bereichsweise mehr oder weniger auf die Schrauben förmige Spanneinheit aufgeschraubt oder von dieser herabgeschraubt werden kann. Es versteht sich, dass hierfür eine Verdrehsicherung des Rückstellers um die Verlagerungsachse erforderlich ist. Der Vorteil einer einstückigen Ausführungsform der Spanneinheit ist die besonders einfache Montage und geringe Anzahl von Bauteilen, was die Herstellungskosten reduziert.

In einer Ausführungsform ist an der Spanneinheit, vorzugsweise am ersten Spannelement der Spanneinheit, ein Rastabschnitt ausgebildet, welcher mit dem Gehäuse in einen formschlüssigen Eingriff bringbar ist, um die Spanneinheit im ersten Zustand oder im zweiten Zustand zu halten. Die Rastabschnitte sind vorzugsweise als lokale Vorsprünge ausgebildet, welche in entsprechend korrespondierenden Rücksprüngen am Gehäuse eingreifen können um eine zumindest teilweise Verdrehsicherung zu gewährleisten. Es versteht sich, dass diese Verdrehsicherung zum Verstellen der Spanneinheit überwunden werden muss.

In einer Ausführungsform weist die Spanneinheit, bevorzugt das erste Spannelement, einen Betätigungsabschnitt weist, welcher zur Übertragung eines um die Verlagerungsachse wirkenden Drehmoments auf die Spanneinheit, insbesondere auf das erste Spannelement, ausgelegt ist. Der Betätigungsabschnitt am ersten Spannelement kann vorzugsweise als einfache Bohrung ausgeführt sein, in welcher beispielsweise ein Schraubenzieher oder ein stangenförmiges Werkzeug eingeführt werden kann. Alternativ oder zusätzlich kann der oder ein weiterer Betätigungsabschnitt als beispielsweise innensechskantförmige Aussparung ausgeführt sein, in welche ein entsprechendes Werkzeug eingesteckt werden kann um ein Drehmoment auf das erste Spannelement auszuüben. Weiterhin bevorzugt kann der Betätigungsabschnitt zum Eingriff mit einem Betätigungsteil ausgeführt sein, welches eine händische Übertragung eines Drehmomentes beispielsweise mittels eines Eingriffskopfes erlaubt.

In einer Ausführungsform verläuft die Verlagerungsachse kollinear zur Spannachse. In dieser Ausführungsform überträgt somit die Spanneinheit eine Vorspannkraft auf den Rücksteller in exakt derselben Richtung wie auch das zweite Spannelement verlagert wird. Darüber hinaus überträgt auch der Rücksteller seine Federkraft entlang einer Federachse auf den Radträger, wobei die Federachse ebenfalls mit Vorteil parallel oder kollinear zur Spannachse verläuft. Es versteht sich, dass bei Verschwenkung des Radträgers relativ zum Arm auch eine gewisse Verschwenkung der Federachse relativ zur Spannachse entsteht. Die im Wesentlichen parallele Ausrichtung der Federachse zur Spannachse ergibt sich somit vorzugsweise im nicht eingefederten Zustand, bzw. im vollständig ausgefederten Zustand der Radaufhängung.

In einer Ausführungsform ist die erste Vorspannkraft ein 0,2- bis 0,8-faches, vorzugsweise ein 0,3- bis 0,8-faches und insbesondere ein 0,5- bis 0,7-faches der zweiten Vorspannkraft beträgt. Das Verhältnis der ersten zur zweiten Vorspannkraft ist insbesondere ein Ausdruck für die Bandbreite, mit welcher die Spanneinheit eine Anpassung der Federung eines Kindertransportfahrzeuges erlaubt. Als besonders günstiger Kompromiss zwischen einer geringen Baugröße und ausreichendem Komfort hat sich dabei insbesondere der größte Bereich von 0,2 bis 0,8 bewährt. Insbesondere für Kindertransportfahrzeuge mit besonders hohem Komfortanspruch ist ein Bereich von 0,5 bis 0,7 für das Verhältnis der erste Vorspannkraft zur zweiten Vorspannkraft vorteilhaft.

In einer Ausführungsform ist am Gehäuse ein Indikator ausgebildet, welcher den Zustand der Spanneinheit anzeigt, wobei der Indikator bevorzugt als Aussparung im Gehäuse ausgebildet ist, durch welche die Position oder Stellung der Spanneinheit ablesbar ist. Der Indikator erlaubt ist, insbesondere bei aus dem Eingriffsbereich des Fahrzeugrahmens herausgenommener Federeinheit, unmittelbar zu erkennen, in welchem Zustand sich die Spanneinheit befindet. Insbesondere bevorzugt ist der Indikator dabei mit einer Skala versehen, welche einen Hinweis auf die eingestellte Vorspannkraft oder das entsprechend vorgesehene Gewicht der Zuladung des Kindertransportfahrzeuges für diesen Federungszustand mitteilt.

In einer Ausführungsform ist entweder der Rücksteller als Spiralfeder ausgelegt, oder der Rücksteller ist als hohler oder geschäumter Körper aus elastisch verformbarem Material, beispielsweise als Gummikörper oder aus TPU, ausgebildet. Spiralfedern sind insbesondere vorteilhaft, da sie über einen besonders großen Federweg relativ gleichmäßige Federkräfte bereitstellen können und somit für eine große Bandbreite von Federungen und am Kindertransportfahrzeug vorgesehenen Gewichten geeignet sind. Ein aus elastischem Kunststoff, vorzugsweise Gummi, besonders bevorzugt hohlem oder geschäumtem Material ausgebildeter Rücksteller erfüllt neben einer Federungsfunktion zusätzlich auch noch eine Dämpfungsfunktion, was sich als besonders vorteilhaft für unebenes Gelände erwiesen hat.

In einer Ausführungsform ist die Spanneinheit aus Kunststoff ausgebildet. Um die Fertigungskosten gering zu halten und die Federeinheit besonders leichtbauend auslegen zu können, ist die Spanneinheit vorzugsweise aus Kunststoff und insbesondere bevorzugt vollständig aus Kunststoff ausgeführt. Mit Vorteil sind die kraftübertragenden Teile der Spanneinheit, also mit Vorteil das erste Spannelement und das zweite Spannelement aus Kunststoff ausgeführt. Alternativ können zumindest die besonders hochbelasteten Teile der Spanneinheit, wie ein als Schraube ausgeführtes erstes Spannelement und eine Mutter zum Eingriff mit dem zweiten Spannelement, aus Metall ausgebildet sein, um die Lebensdauer der Spanneinheit zu erhöhen.

Erfindungsgemäß ist eine Radaufhängung, insbesondere zum Einsatz in einem Kindertransportfahrzeug, vorgesehen, umfassend einen Arm und Radträger, wobei der Radträger schwenkbar um eine Rotationsachse am Arm festgelegt ist, wobei beabstandet von der Rotationsachse eine Federeinheit nach einem der vorhergehenden Ansprüche angeordnet ist, welche dazu ausgelegt ist, eine Federkraft zwischen dem Arm und dem Radträger zu etablieren. Die Radaufhängung ermöglicht eine Federung dabei vorzugsweise nicht über eine Parallele oder Geradwegführung der zueinander beweglichen Teile, sondern über eine Schwenkbewegung des Radträgers relativ zum Arm. Dies erlaubt eine stabilere Ausführung, wobei die sich relativ zueinander bewegen Teile besonders gut gegen Staub und Schmutz geschützt werden können und somit die Lebensdauer erhöht ist. Darüber hinaus ist durch das vorsehen eines bestimmten Hebelarmes, mit welchem die Federeinheit auf den Radträger und den Arm wirkt, eine weichere Federung möglich, und die kraftübertragenden Teile der Federeinheit können aus Kunststoff ausgebildet werden, da die anliegenden Kräfte geringer sind als bei einer Geradwegfederung. Vorzugsweise ist im Aufnahmeabschnitt am Rahmen des Kindertransportfahrzeugs zumindest ein Lager, insbesondere ein Wälzlager, eingerastet, welches die schwenkbare Lagerung des Armes über das Gehäuse verbessert.

In einer Ausführungsform ist am Radträger ein Aufnahmeabschnitt zur Aufnahme des Rückstellers und dessen Sicherung gegen Verlagerung quer zur Spannachse ausgebildet ist. Besonders bevorzugt weist der Radträger an seiner Oberseite einen vorzugsweise pfannenartig ausgebildeten Aufnahmeabschnitt auf, in welchem ein als Schraubenfeder ausgeführte Rücksteller eingreifen kann. Alternativ hierzu kann der Aufnahmeabschnitt auch als lokaler Vorsprung am Radträger ausgebildet sein, welcher insbesondere zum Eingriff mit einem als Gummikörper ausgeführten Rücksteller vorgesehen ist. Durch einen Vorsprung lässt sich in Zusammenhang mit einem als Gummikörper ausgeführten Rücksteller insbesondere die Federcharakteristik beeinflussen, da ein Einfedern des Vorsprunges in den Rücksteller die entsprechende elastische Rückstellkraft nichtlinearer verändert werden kann.

In einer Ausführungsform ist das Gehäuse einstückig am Arm ausgebildet ist, oder derart am Arm festgelegt ist, dass keine Relativbewegung zwischen Arm und Gehäuse möglich ist, wobei das Gehäuse bevorzugt an seiner Außenseite als Aufnahmezapfen zum drehbaren Eingriff mit einem Rahmenteil des Kindertransportfahrzeugs ausgebildet ist. Diese besonders einfache und kompakte Ausbildung des Gehäuses als einstückiger Bereich am Arm erleichtert wiederum die Montage der Federeinheit und reduziert die Fehleranfälligkeit. Insbesondere gekapselt das Gehäuse in diesem Ausführungsbeispiel auf besonders effektive Weise seinen Innenraum, in welchem die Spanneinheit angeordnet ist, gegen das Eindringen von Schmutz und Flüssigkeiten.

In einer Ausführungsform weist der Arm einen Anschlag auf, welcher dafür ausgelegt ist, die Verschwenkung des Radträgers zu begrenzen, wobei die Federeinheit dazu ausgelegt ist, den Radträger gegen den Anschlag vorzuspannen. Um überhaupt eine Vorspannung erreichen zu können, weist der Arm einen Anschlag auf, an welchem der Radträger im vollständig ausgefederten Zustand anschlägt, wodurch ein weiteres Ausfedern des Radträgers aus dem Arm verhindert ist. Die Spanneinheit spannt den Rücksteller somit insbesondere gegen den Radträger vor, wobei dieser im ausgefederten Zustand am Anschlag anliegt.

Weitere Vorteile und charakteristische Eigenschaften der vorliegenden Erfindung ergeben sich aus der nachfolgenden Beschreibung mit Bezug auf die beigefügten Figuren. Gleiche Merkmale werden in den Figuren jeweils mit gleichen Bezugszeichen verwendet, auch wenn sie Teil unterschiedlicher Ausführungsformen sind. Es versteht sich dabei, dass einzelne Merkmale, welche nur für eine bestimmte Ausführungsform explizit beschrieben werden, auch in anderen Ausführungsformen der Erfindung zum Einsatz gelangen können sollen, sofern sich dies nicht aufgrund technischer Gegebenheiten verbietet.

Es zeigen:
- Fig. 1: eine perspektivische Explosionsansicht einer Ausführungsform einer Radaufhängung;
- Fig. 2: eine Schnittansicht eines Bereiches einer bevorzugten Ausführungsform einer Radaufhängung;
- Fig. 3: eine Detailansicht einer Ausführungsform einer Federeinheit;
- Fig. 4: eine perspektivische Ansicht einer Ausführungsform einer Radaufhängung;
- Fig. 5: eine Explosionsansicht von Teilen einer Ausführungsform einer Radaufhängung;
- Fig. 6: eine Explosionsansicht einer weiteren Ausführungsform einer Radaufhängung;
- Fig. 7 und 8: zwei Schnittansichten einer Ausführungsform einer Radaufhängung in zwei Zuständen; und
- Fig. 9: eine Explosionsansicht einer weiteren Ausführungsform einer Radaufhängung.

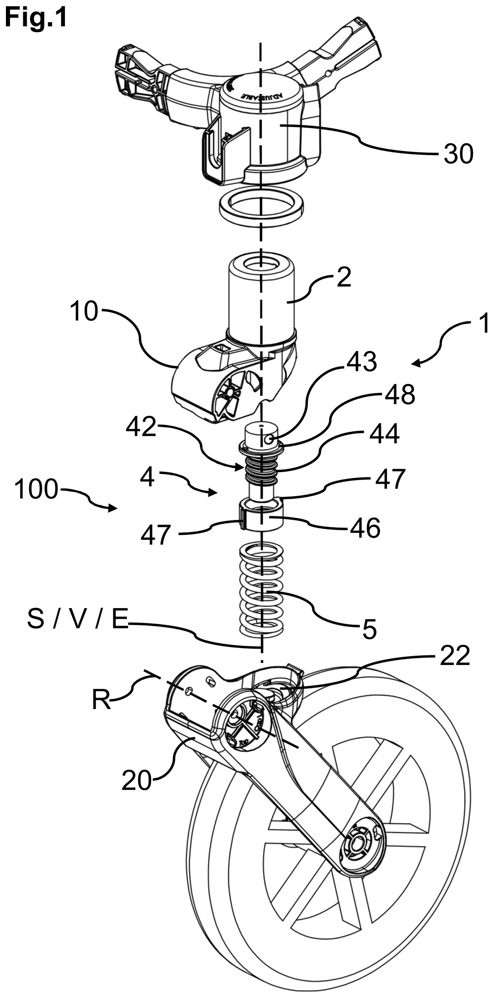

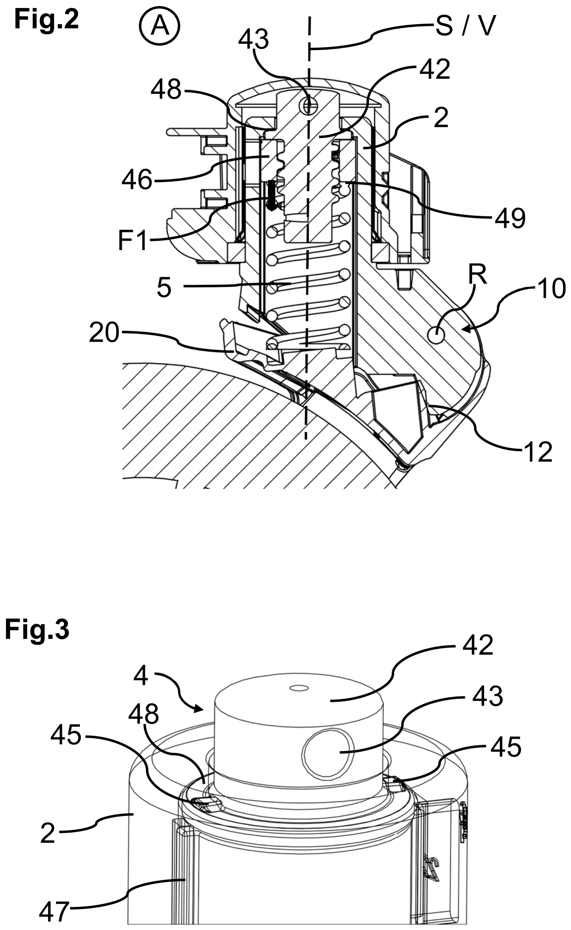

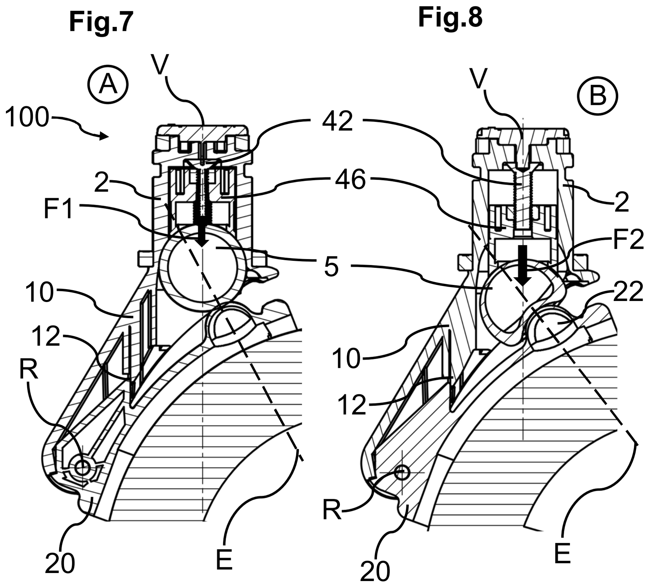

Die in **Figur 1** gezeigte Ausführungsform von Teilen einer Radaufhängung 100 weist eine Federeinheit 1 auf, welche an einer Aufnahmegeometrie eines Rahmens 30 eines Kindertransportfahrzeuges, angeordnet und festlegbar ist. Die Radaufhängung 100 weist dabei insbesondere einen Arm 10 und einen Radträger 20 auf welche schwenkbar zueinander um eine Rotationssachse R aneinander festgelegt sind. Zur Stoßdämpfung und Federung der verschwenkenden Bewegung des Armes 10 und des Radträgers 20 zueinander, ist eine Federeinheit 1 vorgesehen. Die Federeinheit 1 weist ein Gehäuse 2 auf, in welchem eine Spanneinheit 4 vorgesehen ist. In der Ausführungsform der Figur eins ist das Gehäuse 2 mit Vorteil einstückig mit dem Arm 10 ausgeführt, was eine besonders leichte Bauweise und eine gute Kapselung gegen Feuchtigkeit und Staub erreicht. Das Gehäuse 2 der Federeinheit wiederum ist als Zapfen ausgebildet, welcher in den entsprechenden Aufnahmebereich am Rahmen 30 des Kindertransportfahrzeuges derart einschiebbar ist, dass auch das Gehäuse 2 im Wesentlichen vor dem Eindringen von Feuchtigkeit und Schmutz geschützt ist. Auf diese Weise lässt sich auch die am Gehäuse 2 angeordnete Öffnung, durch welche hindurch die Spanneinheit 4 hindurchragt um eingestellt zu werden, gegenüber der Umgebung abschirmen. Die Federeinheit 1 ist derart zwischen dem Arm 10 und dem Radträger 20 angeordnet, dass sie eine Vorspannkraft F1, F2 zwischen dem Arm zu 14 und dem Radträger 20 etabliert, welche entlang einer Spannachse S wirkt. Die Spannachse S ist dabei beabstandet von der Rotationssachse R angeordnet, wodurch wiederum der Hebelarm definiert ist, mit welchem die Federeinheit 1 auf die Radaufhängung 100 wirkt, um den Radträger 20 gegenüber dem Arm 10 abzufedern. Die Spanneinheit 4 ist in dieser Ausführungsform zweiteilig ausgeführt und weist ein erstes Spannelement 42 und ein zweites Spannelement 46 auf, wobei das erste Spannelement 42 einen als Gewinde ausgeführten Eingriffsabschnitt 44 aufweist, welcher mit dem zweiten Spannelement 46 in Eingriff steht um dieses entlang einer Verlagerungsachse V zu verlagern. Das erste Spannelement 42 weist dabei einen ersten Stützabschnitt 48 auf, welcher bevorzugt kragenförmig ausgeführt ist und zur Abstützung des ersten Spannelements 42 am Gehäuse 2 dient. Das zweite Spannelement 46 weist an seiner in der Figur unteren Fläche einen zweiten Stützabschnitt 49 auf, an welchem das zweite Spannelement 46 eine Vorspannkraft F1, F2 auf den Rücksteller 5 überträgt. Der Rücksteller 5 ist mit Vorteil als Spiralfeder ausgeführt, wobei Spiralfedern besonders für gleichmäßige Federung über verhältnismäßig große Federwege geeignet sind. Das zweite Spannelement 46 ist mit Vorteil ringförmig ausgebildet und weist an seiner Innenseite ein Gewinde auf, welches mit dem vorzugsweise als Gewinde ausgebildeten Eingriffsabschnitt 44 des ersten Spannelements 42 zusammenwirkt. Eine Rotation des ersten Spannelements 42 um die Verlagerungsachse V verlagert das zweite Spannelement 46 entlang der Verlagerungsachse V derart, dass die Spanneinheit 4 in einen ersten Zustand A oder in einen zweiten Zustand B oder umgekehrt versetzt wird. Im ersten Zustand A, welcher beispielsweise in Fig. 2 gezeigt ist, überträgt das zweite Spannelement 46 eine erste Vorspannkraft F1 auf den Rücksteller 5, welche geringer ist, als eine zweite Vorspannkraft F2 im zweiten Zustand B, welcher beispielsweise in Fig. 8 gezeigt ist. Es versteht sich, dass die Spanneinheit 4, neben dem ersten Zustand A und dem zweiten Zustand B noch in weitere dazwischen liegende Zustände versetzt werden kann, wobei die Vorspannkraft mit Vorteil stufenlos einstellbar ist. Um eine Rotation des zweiten Spannelements 46 relativ zum Gehäuse 2 zu verhindern, weist das zweite Spannelement 46 an seiner Außenseite zumindest eine, und in der gezeigten Ausführungsform vorzugsweise zwei Rotationssicherungen 47, auf. Mit Vorteil weist das erste Spannelement 42 einen Eingriffsabschnitt 43 auf, welcher zum Eingriff mit einem Werkzeug, wie beispielsweise einem Schraubenzieher, ausgelegt ist. Dies erleichtert die Drehmomentübertragung auf das erste Spannelement 42. In der in Fig. 1 gezeigten Ausführungsform ist der Eingriffsabschnitt 43 als einfache Bohrung im Kopfbereich des ersten Spannelements 42 ausgeführt. Das zweite Spannelement 46 ist bevorzugt in der Aussparung des Gehäuses geführt entlang der Verlagerungsachse V verlagerbar und ist gegen Rotation um die Verlagerungsachse V gesichert. Der Rücksteller 5 sitzt mit Vorteil an seiner Unterseite in einem Aufnahmeabschnitt 22, welcher am Radträger 20 ausgebildet ist und vorzugsweise eine seitliche Sicherung des Rückstellers 5 erlaubt. In dieser Ausführungsform verläuft die Verlagerungsachse V, entlang derer das zweite Spannelement 46 verlagerbar ist, kollinear zur Spannachse S entlang welcher die Vorspannkraft F1, F2 wirkt. Darüber hinaus ist auch wirkt auch die Federkraft, welche vom Rücksteller 5 auf den Radträger 20 übertragen wird entlang einer Federachse E, welche im Wesentlichen parallel zur Spannachse S verläuft. Mit Vorteil ergibt sich hieraus eine besonders kompakte Bauweise der Federeinheit 1 und mit Vorteil der mit dieser ausgestatteten Radaufhängung 100.

**Figur 2** zeigt eine Schnittansicht einer Ausführungsform, welche mit Vorteil der in Fig. 1 gezeigten Ausführungsform entspricht. Das zweite Spannelement 46 befindet sich in seiner obersten Stellung im Gehäuse 2, was die Spanneinheit 4 in ihre erste Stellung A versetzt, in welcher sie eine erste Vorspannkraft F1 auf den Rücksteller 5 überträgt. Beabstandet von der Rotationsachse R ist am Arm 10 mit Vorteil ein Anschlag 12 ausgebildet, welcher die Verschwenkung des Radträgers 20 auf die in Fig. 2 gezeigte Stellung begrenzt. Mit anderen Worten bestimmt der Anschlag 12 somit den vollständig ausgefederten Zustand der Radaufhängung 100, wobei in dieser Stellung die von der Spanneinheit 4 aufgebrachte Vorspannkraft definiert ist.

**Figur 3** zeigt eine teilweise transparente Ansicht einer Ausführungsform der Spanneinheit 4, welche im Gehäuse 2 angeordnet ist. Bevorzugt weist die Spanneinheit 4 im Bereich ihrer Abstützung, vorzugsweise auf dem ersten Stützabschnitt 48, am Gehäuse 2 zumindest einen, vorzugsweise zwei Rastabschnitte 45 auf, welche eine bestimmte Verdrehsicherung relativ zum Gehäuse gewährleistet. Diese Verdrehsicherung lässt sich bevorzugt durch einen Anwender durch leichtes Herabdrücken der Spanneinheit 4 außer Kraft setzen. Im Einsatz der Radaufhängung 100 hält mit Vorteil das Gewicht des Kindertransportfahrzeugs den Rastabschnitt 45 in Position und verhindert ein ungewolltes Verdrehen.

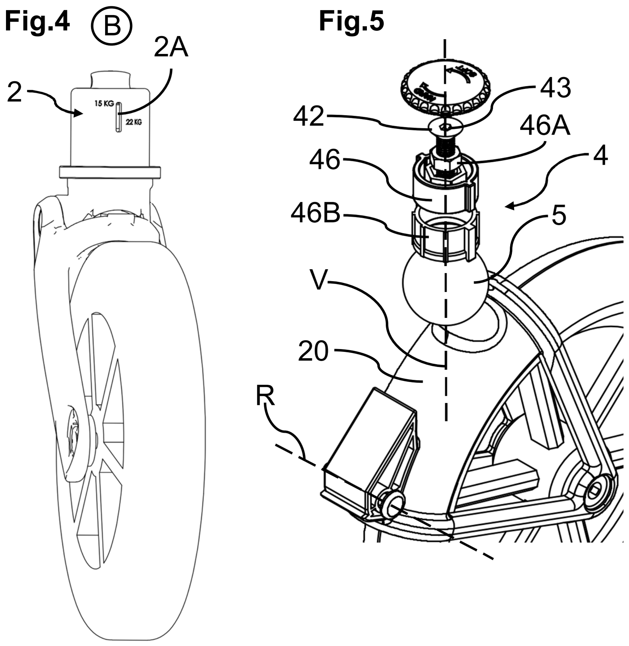

**Figur 4** zeigt eine Außenansicht einer Radaufhängung 100, wobei das Gehäuse 2 mit Vorteil einen Indikator 2A aufweist, welcher die Stellung der Spanneinheit 4 anzeigt, also ob diese sich im ersten Zustand A oder im zweiten Zustand B befindet. Mit Vorteil ist der Indikator als längliche Aussparung ausgeführt, welche parallel zur Verlagerungsachse V ausgerichtet ist.

**Figur 5** zeigt eine Explosionsansicht einer weiteren Ausführungsform einer Radaufhängung 100. Bevorzugt ist der Rücksteller 5 als Gummielement ausgeführt, welches anstelle der in den Figuren 1 - 3 gezeigten Ausführungsformen zum Einsatz kommt. Das Gummielement bietet neben elastischer Abfederung auch eine Dämpfung von federnden Bewegungen der Radaufhängung 100. Mit Vorteil ist der Rücksteller 5 in dieser Ausführungsform aus besonders leichtem, geschäumtem Gummi oder als hohle und mit einem kompressiblen Gas gefüllte Kugel ausgeführt. Das erste Spannelement 42 ist mit Vorteil als einfache und besonders kostengünstige Schraube oder Gewindebolzen ausgeführt und wirkt mit einer Mutter des zweiten Spannelements 46 zusammen. Das zweite Spannelement 46 ist, wie in den zuvor diskutierten Ausführungsformen als ringförmiger Körper ausgebildet, in welchem die Mutter gegen Rotation gesichert angeordnet ist. Zusätzlich zum zweiten Spannelement 46, weist die Spanneinheit 4 ein Adapterelement 46B auf, an welchem der zweite Stützabschnitt 49 ausgebildet ist und welches ausgelegt ist eine Vorspannkraft auf den Rücksteller zu übertragen. In dieser Ausführungsform setzt sich somit das zweite Spannelement 46 aus drei Teilen zusammen, also der Mutter 46A, dem zweiten Spannelement 46 selbst und dem Adapterelement 46B, was eine Auslegung mit geringen Materialspannungen bei zugleich geringem Gewicht der Spanneinheit erlaubt. In dieser Ausführungsform weist die Radaufhängung 100 mit Vorteil einen größeren Hebelarm für den Eingriff der Federeinheit 1 auf, als in den in Fig. 1 - 3 gezeigten Ausführungsformen, insbesondere da die Rotationsachse R weiter von der Spannachse S beabstandet ist, als in den zuvor diskutierten Ausführungsformen.

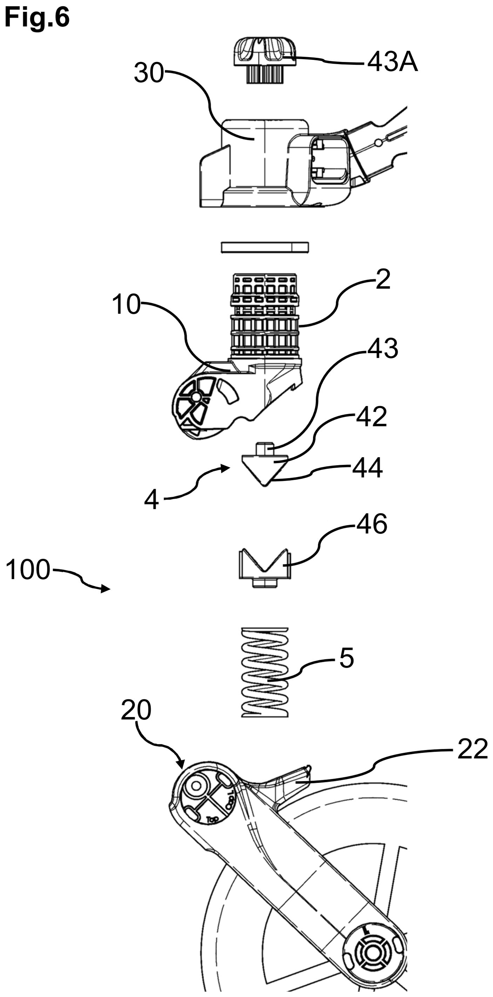

**Figur 6** zeigt eine Explosionsansicht einer weiteren Ausführungsform einer Radaufhängung 100. Zum einen ist in dieser Ausführungsform das Gehäuse 2 mit Vorteil als gitterförmiger, zylinderförmiger Körper ausgebildet, was insbesondere eine leichte Bauweise ermöglicht. Die Sicherung des Innern der Federeinheit gegen das Eindringen Staub dient in diesem Fall der am Rahmen 30 des Kindertransportfahrzeuges vorgesehene, domartige Aufnahmebereich, in welchen das Gehäuse 2 gemeinsam mit der Spanneinheit 4 eingeschoben werden kann. Weiterhin ist das erste Spannelement 42 mit Vorteil mit einem keilförmigen Eingriffsabschnitt 44 ausgebildet, anstelle des in den zuvor beschriebenen Ausführungsformen mit Gewinde. Dieser keilförmige Eingriffsabschnitt 44 wirkt zusammen mit einer korrespondierenden, keilförmigen Geometrie, so dass ein Verdrehen des ersten Spannelements 42 relativ zum zweiten Spannelement 46 um 90° die Spanneinheit 4 vom ersten Zustand A in den zweiten Zustand B oder umgekehrt versetzt. In dieser Ausführungsform lassen sich somit zwei Zustände A, B der Spanneinheit, ohne dazwischen liegende Zustände, einstellen, was für einen Anwender besonders einfach zu handhaben ist. Zur Vereinfachung der Drehmomentübertragung auf das erste Spannelement 42 ist der Betätigungsabschnitt 43 zum Eingriff mit einem als Handgriff ausgebildeten Eingriffskopf 43A ausgeführt, welcher mit einer entsprechenden Eingriffsgeometrie am ersten Spannelement 42 in Eingriff bringbar ist und von einem Anwender händisch, oder mit entsprechendem Werkzeug gedreht werden kann.

Die **Figuren 7 und 8** zeigen eine Ausführungsform einer Radaufhängung im ersten Zustand A und im zweiten Zustand B. Während hier die beispielsweise in Figur 5 gezeigte Ausführungsform der Radaufhängung mit einem kugelförmigen Rücksteller 5 dargestellt ist, versteht es sich, dass das in den Figuren 7 und 8 gezeigte Grundprinzip der Verstellung der Spanneinheit 4 auf die in den Figuren 1 - 3 gezeigten Ausführungsformen anwendbar ist. In Fig. 7 ist das zweite Spannelement 46 in der oberen Stellung angeordnet, wodurch die Spanneinheit 4 in diesem ersten Zustand A nur eine erste Vorspannkraft F1 auf den Rücksteller 5 überträgt, welche den Rücksteller 5 nur geringfügig elastisch verformt. In Fig. 8 befindet sich das zweite Spannelement 46 in seiner unteren Stellung, wodurch die Spanneinheit 4 in ihrem zweiten Zustand B vorliegt, in welcher sie eine zweite Vorspannkraft F2 auf den Rücksteller 5 überträgt. Anders als beispielsweise in den Ausführungsformen der Figuren 1 - 3 über der Rücksteller 5 eine Federkraft auf den Radträger 20 entlang einer Federachse E auf, welche zur Spannachse S verschwenkt ist und vorzugsweise einen kleinsten Winkel von ca. 30° bis 70°, insbesondere von 35° bis 60° aufspannt. Diese Ausführungsform erlaubt eine besonders Platzsparende Ausbildung der Radaufhängung, da der Federweg nicht unbedingt Vertikal verlaufen muss, sondern auch mit einem Winkel zur Vertikalen von größer als 30° bis 70°, was eine größere Flexibilität bei der Auslegung der Radaufhängung 100 erlaubt.

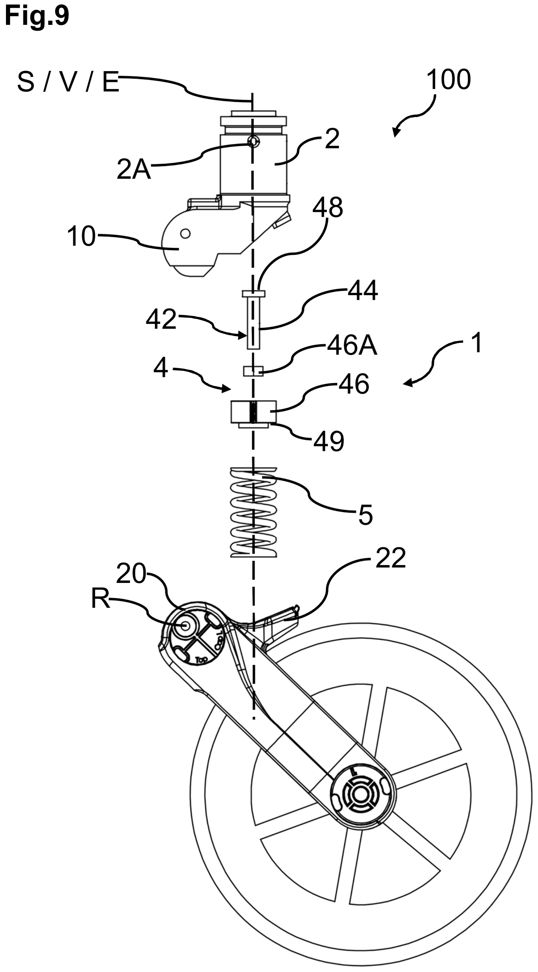

**Figur 9** offenbart eine weitere Ausführungsform einer Radaufhängung 100, welche in Bezug auf die Auslegung des Armes 10, des Gehäuses 2 und des Radträgers 20 der Ausführungsform der Figur 1 gleicht. Der wesentliche Unterschied ist, dass das erste Spannelement 42 als einfache Schraube ausgebildet ist und die Spanneinheit 4 neben dem zweiten Spannelement 46 noch eine Mutter 46A aufweist. Die Mutter 46A und das zweite Spannelement 46 sind mit Vorteil als Einheit zusammengesetzt, wobei die Mutter 46A über das zweite Spannelement 46 gegen Rotation um die Verlagerungsachse V gesichert sind.

### Bezugszeichenliste:

- 1 -: Federeinheit
- 2 -: Gehäuse
- 2A -: Indikator
- 4 -: Spanneinheit
- 5 -: Rücksteller
- 10 -: Arm
- 12 -: Anschlag
- 20 -: Radträger
- 22 -: Aufnahmeabschnitt
- 30 -: Rahmen
- 42 -: erstes Spannelement
- 43 -: Betätigungsabschnitt
- 43A -: Betätigungskopf
- 44 -: Eingriffsabschnitt
- 45 -: Rastabschnitt
- 46 -: zweites Spannelement
- 46A -: Mutter
- 46B -: Adapterelement
- 47 -: Rotationssicherung
- 48 -: erster Stützabschnitt
- 49 -: zweiter Stützabschnitt
- 100 -: Radaufhängung
- A -: erster Zustand
- B -: zweiter Zustand
- E -: Federachse
- F1 -: erste Vorspannkraft
- F2 -: zweite Vorspannkraft
- R -: Rotationsachse
- S -: Spannachse
- V -: Verlagerungsachse

## Patentansprüche

1. Federeinheit (1) insbesondere zum Einsatz in einem Kindertransportfahrzeug, umfassend ein Gehäuse (2), eine Spanneinheit (4) und einen Rücksteller (5), wobei die Spanneinheit (4) einen ersten Stützabschnitt (48) zur Abstützung am Gehäuse (2) und einen zweiten Stützabschnitt (49) zur Übertragung einer entlang einer Spannachse (S) wirkenden Vorspannkraft auf den Rücksteller (5) aufweist,
wobei die Spanneinheit (4) in einem ersten Zustand (A) dazu ausgelegt ist, eine erste Vorspannkraft (F1) auf den Rücksteller (5) zu auszuüben,
wobei die Spanneinheit (4) in einem zweiten Zustand (B) dazu ausgelegt ist, eine zweite Vorspannkraft (F2) auf den Rücksteller (5) zu übertragen,
wobei die zweite Vorspannkraft (F2) größer ist als die erste Vorspannkraft (F1).

2. Federeinheit (1) nach Anspruch 1,
wobei die Spanneinheit (4) ein erstes Spannelement (42) und ein zweites Spannelement (46) aufweist,
wobei die Spannelemente (42, 46) relativ zueinander entlang einer Verlagerungsachse (V) verlagerbar sind und in Eingriff miteinander stehen,
wobei der erste Stützabschnitt (48) am ersten Spannelement (42) ausgebildet ist und der zweite Stützabschnitt (49) am zweiten Spannelement (46) ausgebildet ist.

3. Federeinheit (1) nach Anspruch 2,
wobei das erste Spannelement (42) einen Eingriffsabschnitt (44) aufweist, welcher dafür ausgelegt ist, das zweite Spannelement (46) entlang der Verlagerungsachse (V) zu verlagern.

4. Federeinheit (1) nach Anspruch 3,
wobei der Eingriffsabschnitt (44) derart ausgelegt ist, dass eine Rotation des ersten Spannelements (42) um die Verlagerungsachse (V) eine Verlagerung des zweiten Spannelements (46) parallel zur Verlagerungsachse (V) relativ zum ersten Spannelement (42) bewirkt,
wobei am zweiten Spannelement (46) zumindest eine Rotationssicherung (47), vorzugsweise zwei Rotationssicherungen (47), ausgebildet ist/sind, welche zum Eingriff mit dem Gehäuse (2) ausgebildet ist/sind um das zweite Spannelement (46) gegen Rotation um die Verlagerungsachse (V) relativ zum Gehäuse (2) zu sichern.

5. Federeinheit (1) nach einem der Ansprüche 2 bis 4,
wobei die Spanneinheit (4) ein Kraftübertragungselement (46A) aufweist, welches mit dem Eingriffsabschnitt (44) interagiert, um das zweite Spannelement (46) relativ zum ersten Spannelement (42) zu verlagern,
wobei das Kraftübertragungselement (46A) bevorzugt als Mutter ausgebildet ist, welche in einem korrespondierenden Rücksprung am zweiten Spannelement (46) eingesetzt und gegen Rotation relativ zum zweiten Spannelement (46) gesichert ist.

6. Federeinheit (1) nach Anspruch 5,
wobei das zweite Spannelement (46) als ringförmiger Körper ausgebildet ist und ein Innengewinde zum Eingriff mit dem Eingriffsabschnitt (44) aufweist,
wobei der zweite Stützabschnitt (49) an einer dem Rücksteller (5) zugewandten Stirnfläche des zweiten Spannelements (46) ausgeführt ist.

7. Federeinheit (1) nach einem der vorhergehenden Ansprüche,
wobei an der Spanneinheit (4), vorzugsweise am ersten Spannelement (42) der Spanneinheit (4), ein Rastabschnitt (45) ausgebildet ist, welcher mit dem Gehäuse (2) in einen formschlüssigen Eingriff bringbar ist, um die Spanneinheit (4) im ersten Zustand (A) oder im zweiten Zustand (B) zu halten.

8. Federeinheit (1) nach einem der vorhergehenden Ansprüche,
wobei die Spanneinheit (4), bevorzugt das erste Spannelement (42), einen Betätigungsabschnitt (43) aufweist, welcher zur Übertragung eines um die Verlagerungsachse (V) wirkenden Drehmoments auf die Spanneinheit (4), insbesondere auf das erste Spannelement (42), ausgelegt ist.

9. Federeinheit (1) nach einem der vorhergehenden Ansprüche,
wobei die erste Vorspannkraft (F1) ein 0,2- bis 0,8-faches, vorzugsweise ein 0,3- bis 0,8-faches und insbesondere ein 0,5- bis 0,7-faches der zweiten Vorspannkraft (F2) beträgt.

10. Federeinheit (1) nach einem der vorhergehenden Ansprüche,
wobei am Gehäuse (2) ein Indikator (2A) ausgebildet ist, welcher den Zustand (A, B) der Spanneinheit (4) anzeigt,
wobei der Indikator (2A) bevorzugt als Aussparung im Gehäuse (2) ausgebildet ist, durch welche die Position oder Stellung der Spanneinheit (4) ablesbar ist.

11. Federeinheit (1) nach einem der vorhergehenden Ansprüche,
wobei entweder der Rücksteller (5) als Spiralfeder ausgelegt ist, oder
wobei der Rücksteller (5) als hohler oder geschäumter Körper aus elastischem Material ausgebildet ist.

12. Federeinheit (1) nach einem der vorhergehenden Ansprüche,
wobei die Spanneinheit (4) aus Kunststoff ausgebildet ist.

13. Radaufhängung (100), insbesondere zum Einsatz in einem Kindertransportfahrzeug, umfassend einen Arm (10) und Radträger (20),
wobei der Radträger (20) schwenkbar um eine Rotationsachse (R) am Arm (10) festgelegt ist,
wobei beabstandet von der Rotationsachse (R) eine Federeinheit (1) nach einem der vorhergehenden Ansprüche angeordnet ist, welche dazu ausgelegt ist, eine Federkraft zwischen dem Arm (10) und dem Radträger (20) zu etablieren.

14. Radaufhängung (100) nach Anspruch 13,
wobei das Gehäuse (2) einstückig am Arm (10) ausgebildet ist, oder derart am Arm (10) festgelegt ist, dass keine Relativbewegung zwischen Arm (10) und Gehäuse (2) möglich ist,
wobei das Gehäuse (2) bevorzugt an seiner Außenseite als Aufnahmezapfen zum drehbaren Eingriff mit einem Rahmenteil des Kindertransportfahrzeugs ausgebildet ist.

15. Radaufhängung (100) nach einem der Ansprüche 13 oder 14,
wobei der Arm (10) einen Anschlag (12) aufweist, welcher dafür ausgelegt ist, die Verschwenkung des Radträgers (20) zu begrenzen,
wobei die Federeinheit (1) dazu ausgelegt ist, den Radträger (20) gegen den Anschlag vorzuspannen.
